# EUROPÄISCHE PATENTANMELDUNG

(11) **EP 2 112 741 A1**
(43) Veröffentlichungstag der Anmeldung: **28.10.2009**
(21) Anmeldenummer: 08154937.0
(22) Anmeldetag: 22.04.2008
(51) Int. Cl.: H02J 13/00

(54) **Leistungselektronikregler und Kommunikationsverfahren**

(71) Anmelder: ABB Schweiz AG, 5400 Baden (CH)
(72) Erfinder: Bueckel, Michael, D-79540, Lörrach (DE)
(74) Vertreter: ABB Patent Attorneys

(57) **Zusammenfassung**

Ein Leistungselektronikregler (1) umfasst verschiedene Kommunikationsmodule (13, 14) für den Datenaustausch mit einem Prozessleitsystem (2) und einer Schaltanlage (3) gemäss unterschiedlichen normierten Kommunikationsprotokollen. Der Leistungselektronikregler (1) ist überdies mit einem Netzwerkadapter (11) für die physikalische Anbindung des Leistungselektronikreglers (1) an ein Kommunikationsnetzwerk (4', 5') versehen. Zur eindeutigen Identifizierung im Kommunikationsnetzwerk (4', 5') ist dem Netzwerkadapter (11) eine Netzwerkadresse zugeordnet. Der Netzwerkadapter (11) ist so mit den Kommunikationsmodulen (13, 14) gekoppelt, dass der Datenaustausch vom Leistungselektronikregler (1) mit dem Prozessleitsystem (2) und der Schaltanlage (3) über die selbe Netzwerkadresse (111) des Netzwerkadapters (11) erfolgt. Der gemeinsame und derart gekoppelte Netzwerkadapter (11) ermöglicht den Datenaustausch vom Leistungselektronikregler (1) gemäss spezifischen normierten Kommunikationsprotokollen sowohl mit dem Prozessleitsystem (2) als auch mit der Schaltanlage (3), ohne dass dafür eine doppelte physikalische Anbindung an Kommunikationsnetzwerke (4', 5') oder eine separate Kommunikationsvorrichtung mit einer Kommunikationsschnittstelle zum Leistungselektronikregler (1) erforderlich ist.

## Beschreibung

### Technisches Gebiet

Die vorliegende Erfindung betrifft einen Leistungselektronikregler und ein dafür geeignetes Kommunikationsverfahren. Die vorliegende Erfindung betrifft insbesondere einen Leistungselektronikregler und ein Kommunikationsverfahren für Prozessautomationssysteme, in welchen der Datenaustausch mit einem Prozessleitsystem und mit einer Schaltanlage jeweils gemäss verschiedenen normierten Kommunikationsprotokollen durchgeführt wird.

### Stand der Technik

In der Prozessleittechnik und Prozessautomation werden auf der Ebene des Prozessleitsystems respektive Prozessautomationssystems normierte Kommunikationsprotokolle für den Datenaustausch eingesetzt. Zum Beispiel definiert die Norm ISO/IEC 9506 - "Manufacturing Messaging Specification (MMS)" den objektorientierten Austausch von Daten für die Kopplung verteilter Automatisierungssysteme. So kann beispielsweise der Datenaustausch zwischen dem Prozessleitsystem und einem Leistungselektronikregler gemäss der MMS-Norm ausgeführt werden.

Auch auf der Ebene der Schaltanlage, beispielsweise auf der Prozessebene für die Leistungssteuerung in der Energieverteilung, werden Normen für die Kommunikation verwendet. Die Norm IEC 61850 - "Communication Networks and Systems in Substations" definiert die Kommunikation innerhalb einer Schaltanlage. So kann beispielsweise die Kommunikation zwischen einem Leistungselektronikregler und Leistungselektronikmodulen der Schaltanlage gemäss der IEC 61850-Norm ausgeführt werden.

Für den Datenaustausch mit dem Prozessleitsystem (Prozessautomationssystem), z.B. gemäss der MMS-Norm, wird der Leistungselektronikregler beispielsweise über einen Netzwerkadapter mit dem Kommunikationsnetzwerk des Prozessleitsystems verbunden, beispielsweise Systeme der 800xA Plattform von ABB für Konfigurations-, Kontroll- und/oder Überwachungszwecke. Für die Kommunikation mit der Schaltanlage, z.B. gemäss der IEC-61850-Norm, ist der Leistungselektronikregler beispielsweise über eine weitere, separate für IEC-61850 ausgelegte Kommunikationsvorrichtung mit dem Kommunikationsnetzwerk der Schaltanlage verbunden, beispielsweise zur Steuerung von verschiedenen Leistungselektronikmodulen mit Leistungshalbleiterkomponenten wie Leistungsdioden, Leistungsthyristoren oder Bipolartransistoren mit isolierter Gate-Elektrode (IGBT). Die Ausführung des Leistungselektronikreglers mit einem Netzwerkadapter für den Datenaustausch auf der Prozessleitebene sowie einer separaten Kommunikationsvorrichtung für die Kommunikation mit der Schaltanlage erfordert eine aufwändige doppelte physikalische Anbindung an Kommunikationsnetzwerke sowie die Bereitstellung einer Kommunikationsschnittstelle zwischen dem Leistungselektronikregler und der separaten Kommunikationsvorrichtung.

### Darstellung der Erfindung

Es ist eine Aufgabe der vorliegenden Erfindung einen Leistungselektronikregler und ein dafür geeignetes Kommunikationsverfahren vorzuschlagen, welche mindestens einige der Nachteile des Stands der Technik nicht aufweisen. Es ist insbesondere eine Aufgabe der vorliegenden Erfindung einen Leistungselektronikregler und ein dafür geeignetes Kommunikationsverfahren vorzuschlagen, welche den Datenaustausch gemäss normierten Kommunikationsprotokollen zwischen dem Leistungselektronikregler und einem Prozessleitsystem sowie zwischen dem Leistungselektronikregler und einer Schaltanlage ermöglichen, ohne dass dafür eine doppelte physikalische Anbindung an Kommunikationsnetzwerke oder eine separate Kommunikationsvorrichtung mit einer Kommunikationsschnittstelle zum Leistungselektronikregler vorgesehen werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass in einem Leistungselektronikregler ein erstes Kommunikationsmodul für den Datenaustausch mit einem Prozessleitsystem gemäss einem normierten ersten Kommunikationsprotokoll, z.B. gemäss der MMS-Norm, und ein zweites Kommunikationsmodul für die Kommunikation mit einer Schaltanlage gemäss einem normierten zweiten Kommunikationsprotokoll, z.B. gemäss der IEC-61850-Norm, vorgesehen wird. Die Ausführung der Kommunikationsmodule im Leistungselektronikregler ermöglicht die Datenkommunikation sowohl mit einem Prozessleitsystem als auch mit einer Schaltanlage gemäss unterschiedlichen normierten Kommunikationsprotokollen, ohne dass dazu separate Kommunikationsvorrichtungen vorgesehen und mit dem Leistungselektronikregler verbunden werden müssen.

In einer bevorzugten Ausführungsvariante umfasst der Leistungselektronikregler einen Netzwerkadapter für die physikalische Anbindung des Leistungselektronikreglers an ein Kommunikationsnetzwerk, z.B. ein Ethernet, wobei der Netzwerkadapter so mit dem ersten Kommunikationsmodul und dem zweiten Kommunikationsmodul gekoppelt ist, dass vom Leistungselektronikregler der Datenaustausch mit dem Prozessleitsystem und die Kommunikation mit der Schaltanlage über den selben Netzwerkadapter erfolgt. Das erste Kommunikationsmodul und das zweite Kommunikationsmodul werden beispielsweise auf einem mit dem Netzwerkadapter verbundenen Prozessor des Leistungselektronikreglers ausgeführt, und der Leistungselektronikregler umfasst beispielsweise ein Verbindungsmodul, welches Protokolldateneinheiten vom Netzwerkadapter entgegennimmt und basierend auf Adressierungsinformationen an das erste respektive zweite Kommunikationsmodul weiterleitet, und Protokolldateneinheiten vom ersten respektive zweiten Kommunikationsmodul entgegennimmt und für den Datenaustausch mit dem Prozessleitsystem respektive für die Kommunikation mit der Schaltanlage an den Netzwerkadapter weiterleitet. Die derartige Kopplung des Netzwerkadapters mit den Kommunikationsmodulen ermöglicht die Datenkommunikation sowohl mit einem Prozessleitsystem als auch mit einer Schaltanlage ohne Notwendigkeit einer mehrfachen physikalischen Anbindung des Leistungselektronikreglers an mehrere Kommunikationsnetzwerke.

Vorzugsweise ist dem Netzwerkadapter eine Netzwerkadresse zur eindeutigen Identifizierung des Netzwerkadapters im Kommunikationsnetzwerk zugeordnet, beispielsweise eine MAC-Adresse (Medium Access Control, MAC), und der Netzwerkadapter ist so mit dem ersten Kommunikationsmodul und dem zweiten Kommunikationsmodul gekoppelt, dass der Datenaustausch mit dem Prozessleitsystem und die Kommunikation mit der Schaltanlage über die selbe Netzwerkadresse des Netzwerkadapters erfolgt.

Der Netzwerkadapter ist vorzugsweise zudem so mit dem ersten Kommunikationsmodul und dem zweiten Kommunikationsmodul gekoppelt, dass vom Prozessleitsystem empfangene Daten basierend auf einem dem ersten Kommunikationsmodul zugeordneten Adressierungselement, z.B. eine erste IP-Adresse (IP, Internet Protocol), an das erste Kommunikationsmodul leitbar sind, und dass von der Schaltanlage empfangene Daten basierend auf einem dem zweiten Kommunikationsmodul zugeordneten Adressierungselement, z.B. eine zweite IP-Adresse (IP, Internet Protocol), an das zweite Kommunikationsmodul leitbar sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1: zeigt ein Blockdiagramm, welches schematisch einen Leistungselektronikregler darstellt, welcher gemäss einem ersten Kommunikationsprotokoll mit einem Prozessleitsystem und gemäss einem zweiten Kommunikationsprotokoll mit einer Schaltanlage kommuniziert.
- Figur 2: zeigt ein Blockdiagramm, welches schematisch einen Leistungselektronikregler darstellt, welcher mittels eines gemeinsamen Netzwerkadapters mit einem Prozessleitsystem und einer Schaltanlage verbunden ist.

### Wege zur Ausführung der Erfindung

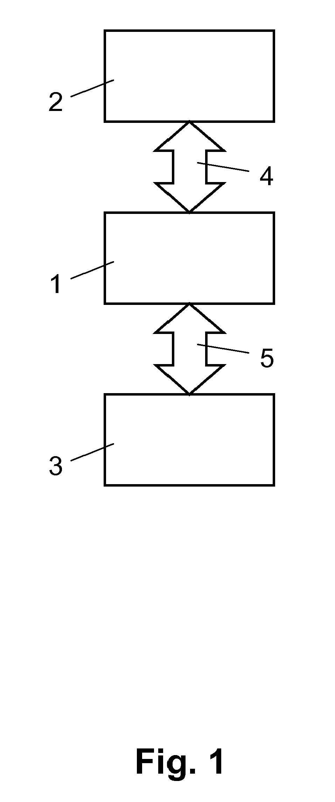

In der Figur 1 bezeichnet das Bezugszeichen 1 einen Leistungselektronikregler, welcher mit einem Prozessleitsystem 2 und einer Schaltanlage 3 für den digitalen Datenaustausch verbunden ist. Der Leistungselektronikregler 1 ist eingerichtet, mit dem Prozessleitsystem 2 Daten gemäss einem ersten (normierten) Kommunikationsprotokoll 4 auszutauschen, z.B. gemäss der MMS-Norm. Vom Prozessleitsystem 2 werden insbesondere nichtzeitkritische Datenobjekte mit Konfigurationsparametern und/oder lauffähigen Regelungsapplikationen und -algorithmen an den Leistungselektronikregler 1 übertragen. Der Leistungselektronikregler 1 ist überdies eingerichtet, mit der Schaltanlage 3 Daten gemäss einem zweiten (normierten) Kommunikationsprotokoll 5 auszutauschen, z.B. gemäss der IEC 61850-Norm. Vom Leistungselektronikregler 1 werden insbesondere Echtzeit-Steuersignale und -Regelsignale an die Schaltanlage 3 übertragen.

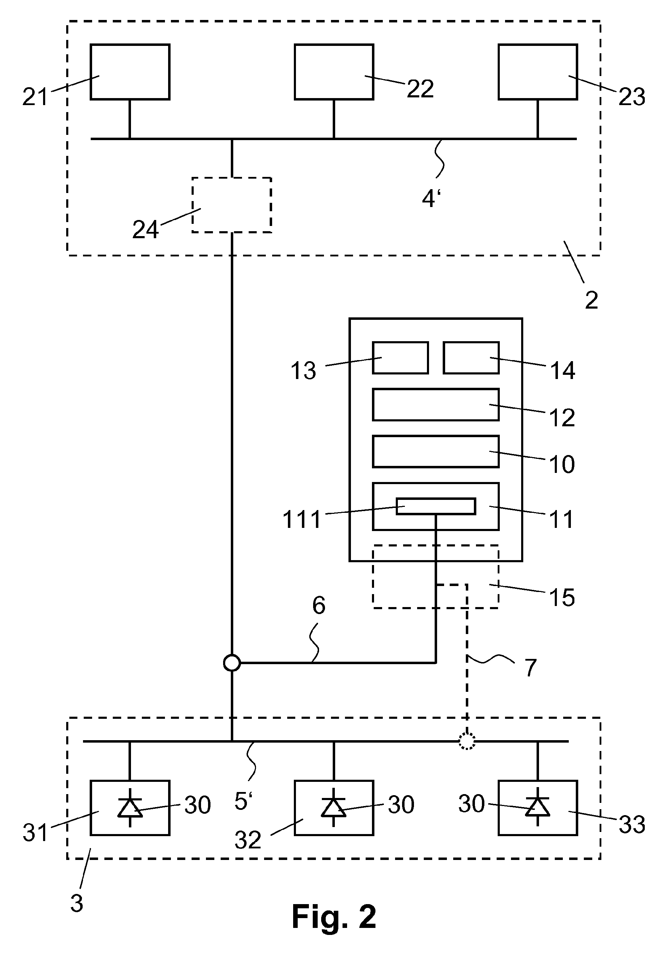

Wie in der Figur 2 dargestellt ist, umfasst das Prozessleitsystem 2 mehrere Computereinheiten 21, 22, 23, die über ein Kommunikationsnetzwerk 4', z.B. Ethernet, miteinander verbunden sind. Die Computereinheiten 21, 22, 23 umfassen beispielsweise eine Bedienungs- und Überwachungseinheit, z.B. eine 800xA Operation & Monitoring Station von ABB, ein Konfigurations-Server mit einer Engineering-Umgebung für die Konfiguration von und die Applikationserstellung für Leistungselektronikregler, redundante Ersatz-Server, Zeitsynchronisations-Servers und/oder einen oder mehrere optionale Verbindungs-Server 20, z.B. ein 61850 Connectivity Server und/oder ein AC800M Connectivity Server. Wenn für die Kommunikation unter den Computereinheiten 21, 22, 23 des Prozessleitsystems 2 OPC (Object Linking and Embedding (OLE) for Process Control) verwendet wird und über MMS mit dem Leistungselektronikregler 1 kommuniziert wird, dient beispielsweise ein optionaler Connectivity-Server 24 als OPC/MMS-Gateway.

Die Schaltanlage 3 umfasst eine oder mehrere Unterstationen 31, 32, 33, die über ein Kommunikationsnetzwerk 5', z.B. Ethernet, miteinander verbunden sind. Die Unterstationen 31, 32, 33 umfassen jeweils Leistungselektronikmodule mit Leistungshalbleiterkomponenten 30 wie Leistungsdioden, Leistungsthyristoren oder Bipolartransistoren mit isolierter Gate-Elektrode (IGBT). Die Unterstationen 31, 32, 33 sind jeweils für die Datenkommunikation gemäss der IEC 61850-Norm eingerichtet.

Der Leistungselektronikregler 1 umfasst einen Netzwerkadapter 11, welcher über die Kommunikationsverbindung 6 direkt mit dem Kommunikationsnetzwerk 4', 5' verbunden ist. Der Netzwerkadapter 11 weist eine Netzwerkadresse 111 zur eindeutigen Identifizierung des Netzwerkadapters 11 im Kommunikationsnetzwerk 4', 5' auf. Die Netzwerkadresse 111 ist eine Hardware-Adresse, insbesondere eine MAC-Adresse, die im Netzwerkadapter 11 gespeichert ist. In einer Ausführungsvariante ist dem Netzwerkadapter 11 ein optionales Schaltmodul 15 (Switch) vorgeschaltet, welches den Netzwerkadapter 11 über separate Kommunikationsverbindungen 6, 7 mit den Kommunikationsnetzwerken 4', 5' verbindet, die in diesem Fall physisch getrennt sind.

Der Leistungselektronikregler 1 umfasst zudem zwei unterschiedliche Kommunikationsmodule 13, 14 für den Datenaustausch mit dem Prozessleitsystem 2 und der Schaltanlage 3. Das Kommunikationsmodul 13 ist eingerichtet für den Datenaustausch mit dem Prozessleitsystem 2, beispielsweise gemäss der MMS-Norm. Das Kommunikationsmodul 14 ist eingerichtet für den Datenaustausch mit der Schaltanlage 3, beispielsweise gemäss der IEC 61850-Norm. Die Kommunikationsmodule 13, 14 sind funktionale Module, die vorzugsweise als programmierte Softwaremodule auf dem Prozessor 10 des Leistungselektronikreglers 1 ausgeführt werden. Der Prozessor 10 ist direkt mit dem Netzwerkadapter 10 verbunden. Der Fachmann wird allerdings verstehen, dass die Kommunikationsmodule 13, 14 in einer alternativen Ausführung teilweise oder vollständig als Hardwaremodule ausgeführt werden können. Zur individuellen Adressierung sind den Kommunikationsmodulen 13, 14 jeweils unterschiedliche Adressierungselemente, vorzugsweise unterschiedliche IP-Adressen zugeordnet.

Der Leistungselektronikregler 1 umfasst als weiteres funktionales Modul das Verbindungsmodul 12, welches eingerichtet ist, Protokolldateneinheiten vom Netzwerkadapter 11 entgegenzunehmen, die mit der Netzwerkadresse 111 adressiert, vom Netzwerkadapter 11 über das Kommunikationsnetzwerk 4', 5' empfangen wurden. Das Verbindungsmodul 12 untersucht die oben erwähnten Adressierungselemente (IP-Adresse) der Protokolldateneinheiten, und leitet die Protokolldateneinheiten (respektive die darin enthaltenen "Nutzdaten" für übergeordnete Protokollschichten) basierend auf diesen Adressierungsinformationen zur weiteren Verarbeitung an das erste oder zweite Kommunikationsmodul 13, 14 weiter. In umgekehrter Richtung leitet das Verbindungsmodul 12 Protokolldateneinheiten (respektive zu übermittelnde "Nutzdaten") vom ersten oder zweiten Kommunikationsmodul 13, 14 an den Netzwerkadapter 11 zur Übermittlung über das Kommunikationsnetzwerk 4', 5' an das Prozessleitsystem 2 respektive die Schaltanlage 3. Die über das Kommunikationsnetzwerk 4', 5' übermittelten Protokolldateneinheiten enthalten neben der Netzwerkadresse 111 des Netzwerkadapters 11 als Adressierungsinformation des Absenders auch die Adressierungselemente (IP-Adresse) des betreffenden Kommunikationsmoduls 13, 14. Das Verbindungsmodul 12 wird vorzugsweise als programmiertes Softwaremodul auf dem Prozessor 10 des Leistungselektronikreglers 1 ausgeführt, kann in einer alternativen Ausführung allerdings auch teilweise oder vollständig als Hardwaremodul ausgeführt werden.
Der Computerprogrammcode der funktionalen Module ist Teil eines Computerprogrammprodukts und ist vorzugsweise im Leistungselektronikregler 1 gespeichert, auf einem computerlesbaren Datenträger, der fest oder entfernbar mit dem Prozessor 10 des Leistungselektronikreglers 1 verbunden ist.

## Patentansprüche

1. Leistungselektronikregler (1), umfassend:
ein erstes Kommunikationsmodul (13) für den Datenaustausch mit einem Prozessleitsystem (2) gemäss einem normierten ersten Kommunikationsprotokoll (4), und
ein zweites Kommunikationsmodul (14) für die Kommunikation mit einer Schaltanlage (3) gemäss einem normierten zweiten Kommunikationsprotokoll (5).

2. Leistungselektronikregler (1) nach Anspruch 1, **gekennzeichnet durch** einen Netzwerkadapter (11) für die physikalische Anbindung des Leistungselektronikreglers (1) an ein Kommunikationsnetzwerk (4', 5'), wobei der Netzwerkadapter (11) so mit dem ersten Kommunikationsmodul (13) und dem zweiten Kommunikationsmodul (14) gekoppelt ist, dass vom Leistungselektronikregler (1) der Datenaustausch mit dem Prozessleitsystem (2) und die Kommunikation mit der Schaltanlage (3) über den Netzwerkadapter (11) erfolgt.

3. Leistungselektronikregler (1) nach Anspruch 2, **dadurch gekennzeichnet, dass** dem Netzwerkadapter (11) eine Netzwerkadresse zur eindeutigen Identifizierung des Netzwerkadapters (11) im Kommunikationsnetzwerk (4', 5') zugeordnet ist, und dass der Netzwerkadapter (11) so mit dem ersten Kommunikationsmodul (13) und dem zweiten Kommunikationsmodul (14) gekoppelt ist, dass der Datenaustausch mit dem Prozessleitsystem (2) und die Kommunikation mit der Schaltanlage (3) über die selbe Netzwerkadresse (111) des Netzwerkadapters (11) erfolgt.

4. Leistungselektronikregler (1) nach Anspruch 3**, dadurch gekennzeichnet, dass** die Netzwerkadresse (111) eine MAC-Adresse ist.

5. Leistungselektronikregler (1) nach einem der Ansprüche 3 oder 4, **dadurch gekennzeichnet, dass** dem ersten Kommunikationsmodul (13) und dem zweiten Kommunikationsmodul (14) jeweils unterschiedliche Adressierungselemente zugeordnet sind, und dass der Netzwerkadapter (11) so mit dem ersten Kommunikationsmodul (13) und dem zweiten Kommunikationsmodul (14) gekoppelt ist, dass vom Prozessleitsystem (2) empfangene Daten basierend auf dem dem ersten Kommunikationsmodul (13) zugeordneten Adressierungselement an das erste Kommunikationsmodul (13) leitbar sind, und dass von der Schaltanlage (3) empfangene Daten basierend auf dem dem zweiten Kommunikationsmodul (14) zugeordneten Adressierungselement an das zweite Kommunikationsmodul (14) leitbar sind.

6. Leistungselektronikregler (1) nach Anspruch 5, **dadurch gekennzeichnet, dass** die Adressierungselemente als IP-Adressen ausgeführt sind.

7. Leistungselektronikregler (1) nach einem der Ansprüche 2 bis 6, **dadurch gekennzeichnet, dass** der Leistungselektronikregler (1) einen mit dem Netzwerkadapter (11) verbundenen Prozessor (10) umfasst, dass das erste Kommunikationsmodul (13) und das zweite Kommunikationsmodul (14) auf dem Prozessor (10) ausgeführt werden, und dass der Netzwerkadapter (11) so mit dem Prozessor (10) gekoppelt ist, dass der Datenaustausch zwischen dem ersten Kommunikationsmodul (13) und dem Prozessleitsystem (2) und die Kommunikation zwischen dem zweiten Kommunikationsmodul (14) und der Schaltanlage (3) vom Prozessor (10) über den Netzwerkadapter (11) geführt wird.

8. Leistungselektronikregler (1) nach einem der Ansprüche 2 bis 7, **gekennzeichnet durch** ein Verbindungsmodul (12), welches eingerichtet ist, Protokolldateneinheiten vom Netzwerkadapter (11) entgegenzunehmen und basierend auf Adressierungsinformationen an das erste Kommunikationsmodul (13) oder das zweite Kommunikationsmodul (14) weiterzuleiten, und Protokolldateneinheiten vom ersten Kommunikationsmodul (13) und vom zweiten Kommunikationsmodul (14) entgegenzunehmen und für den Datenaustausch mit dem Prozessleitsystem (2) respektive für die Kommunikation mit der Schaltanlage (3) an den Netzwerkadapter (11) weiterzuleiten.

9. Leistungselektronikregler (1) nach einem der Ansprüche 2 bis 8, **dadurch gekennzeichnet, dass** das normierte erste Kommunikationsprotokoll (4) gemäss der MMS-Norm definiert ist, dass das normierte zweite Kommunikationsprotokoll (5) gemäss der IEC-61850-Norm definiert ist, dass das Kommunikationsnetzwerk (4', 5') ein Ethernet umfasst, und dass die Schaltanlage (3) Unterstationen (31, 32, 33) mit Leistungselektronikkomponenten (30) umfasst.

10. Verfahren für den Datenaustausch zwischen einem Leistungselektronikregler (1) und einem Prozessleitsystem (2) sowie zwischen dem Leistungselektronikregler (1) und einer Schaltanlage (3), umfassend:
physikalische Anbindung des Leistungselektronikreglers (1) an ein Kommunikationsnetzwerk (4', 5') mittels eines Netzwerkadapters (11) des Leistungselektronikreglers (1),
Datenaustausch zwischen dem Leistungselektronikregler (1) und dem Prozessleitsystem (2) über den Netzwerkadapter (11) gemäss einem normierten ersten Kommunikationsprotokoll (4), und
Datenaustausch zwischen dem Leistungselektronikregler (1) und der Schaltanlage (3) über den selben Netzwerkadapter (11) gemäss einem normierten zweiten Kommunikationsprotokoll (5).

11. Computerprogrammprodukt umfassend: Computerprogrammcodemittel zur Steuerung eines Prozessors (12) eines mit einem zur physikalischen Anbindung an ein Kommunikationsnetzwerk (4', 5') eingerichteten Netzwerkadapter (11) versehenen Leistungselektronikreglers (1), derart, dass der Leistungselektronikregler (1)
Daten gemäss einem normierten ersten Kommunikationsprotokoll (4) über den Netzwerkadapter (11) mit einem Prozessleitsystem (2) austauscht, und
Daten gemäss einem normierten zweiten Kommunikationsprotokoll (5) mit einer Schaltanlage (3) über den selben Netzwerkadapter (11) austauscht.
